# EUROPEAN PATENT APPLICATION

(11) **EP 3 988 960 A1**
(43) Date of publication of application: **27.04.2022**
(21) Application number: 20832863.3
(22) Date of filing: 04.06.2020
(51) Int. Cl.: G01S 7/03, H01Q 1/32, H01Q 1/42, H01Q 19/06

(54) **RADAR DEVICE**

(30) Priority: 24.06.2019 JP 2019116262
(71) Applicant: Hitachi Astemo, Ltd., Ibaraki 312-8503 (JP)
(72) Inventor: CHUJO, Norio, Tokyo 100-8280 (JP)
(74) Representative: Mewburn Ellis LLP
(86) International application number: PCT/JP2020/022149
(87) International publication number: WO 2020/261922

(57) **Abstract**

A radar device includes a transmission antenna that emits a radio wave toward an object; a reception antenna that receives a reflected wave, in which the radio wave emitted from the transmission antenna is reflected by the object; and a radome that covers the transmission antenna and the reception antenna; where the radome includes a first layer and a second layer disposed at a position closer to the transmission antenna and the reception antenna than the first layer; the second layer of the radome has a dielectric constant lower than that of the first layer, and has a convex portion that is convex in a radio wave emission direction of the transmission antenna at a position corresponding to the transmission antenna, and the first layer of the radome has a concave portion or a through-hole at a position corresponding to the convex portion of the second layer.

## Description

### Technical Field

The present invention relates to a radar device.

### Background Art

In recent years, in order to realize driver support and automatic driving, adoption of a radar device that detects the surroundings of an automobile has been advanced. Such a radar device generally emits a radio wave from a transmission antenna, receives the radio wave reflected by a target with a reception antenna provided separately from the transmission antenna, and calculates the position and speed of the target.

In a radar device for an automobile, a wide viewing angle is required as it is necessary to widely sense the surroundings of the automobile. However, when the irradiation range of the radio wave from the transmission antenna is expanded to widen the viewing angle, a part of the radio wave may be reflected by a cover (radome) installed to protect the antenna and enter the reception antenna. Reflected waves from the radome lead to deterioration of detection performance for the target in the radar device. Therefore, a radar device for an automobile is required to achieve both widening of a viewing angle and reduction of a reflected wave from the radome.

As a background art related to the above, for example, the following PTL 1 is known. PTL 1 discloses a technique in which, in a radome in which an antenna is stored therein, a canceling layer including a multilayer dielectric layer and a matching layer are provided in a portion where reflection is large, thereby canceling a reflected wave from the radome and suppressing generation of the reflected wave itself.

### Citation List

### Patent Literature

PTL 1: JP 2004 -200895 A

### Summary of Invention

### Technical Problem

In the technique of PTL 1, it is possible to reduce the reflected wave from the radome, but an effect on widening the viewing angle cannot be obtained. Therefore, it is difficult to achieve both widening of the viewing angle and reduction of the reflected wave from the radome.

### Solution to Problem

A radar device according to the present invention includes: a transmission antenna that emits a radio wave toward an object; a reception antenna that receives a reflected wave, in which the radio wave emitted from the transmission antenna is reflected by the object; and a radome that covers the transmission antenna and the reception antenna, the radome including a first layer and a second layer disposed at a position closer to the transmission antenna and the reception antenna than the first layer, the second layer of the radome having a dielectric constant lower than that of the first layer, and having a convex portion that is convex in a radio wave emission direction of the transmission antenna at a position corresponding to the transmission antenna, and the first layer of the radome having a concave portion or a through-hole at a position corresponding to the convex portion of the second layer.

### Advantageous Effects of Invention

According to the present invention, it is possible to achieve both widening of the viewing angle and reduction of the reflected wave from the radome.

### Brief Description of Drawings

[FIG. 1] FIG. 1 is a diagram illustrating a radar device according to a first embodiment of the present invention.
[FIG. 2] FIG. 2 is a diagram illustrating a mounting example of the radar device on an automobile.
[FIG. 3] FIG. 3 is a diagram illustrating an antenna gain in the radar device according to the first embodiment of the present invention.
[FIG. 4] FIG. 4 is a diagram illustrating a radar device according to a comparative example.
[FIG. 5] FIG. 5 is a diagram illustrating an antenna gain in a radar device according to a comparative example.
[FIG. 6] FIG. 6 is a diagram illustrating a radar device according to a second embodiment of the present invention.
[FIG. 7] FIG. 7 is a diagram illustrating a radar device according to a third embodiment of the present invention.
[FIG. 8] FIG. 8 is a diagram illustrating a radar device according to a fourth embodiment of the present invention.

### Description of Embodiments

Hereinafter, embodiments of the present invention will be described with reference to the drawings. The following description and drawings are examples for describing the present invention, and are omitted and simplified as appropriate for the sake of clarity of description. The present invention can be implemented in various other forms. Unless otherwise specified, each component may be singular or plural.

Positions, sizes, shapes, ranges, and the like of the components illustrated in the drawings may not represent actual positions, sizes, shapes, ranges, and the like in order to facilitate understanding of the invention. Therefore, the present invention is not necessarily limited to the position, size, shape, range, and the like disclosed in the drawings.

In a case where there is a plurality of components having the same or similar functions, the description may be made with different subscripts given to the same reference numerals. However, in a case where it is not necessary to distinguish the plurality of components, the description may be made with the subscripts omitted.

Hereinafter, a radar device according to embodiments of the present invention will be described with reference to the drawings.

### (First Embodiment)

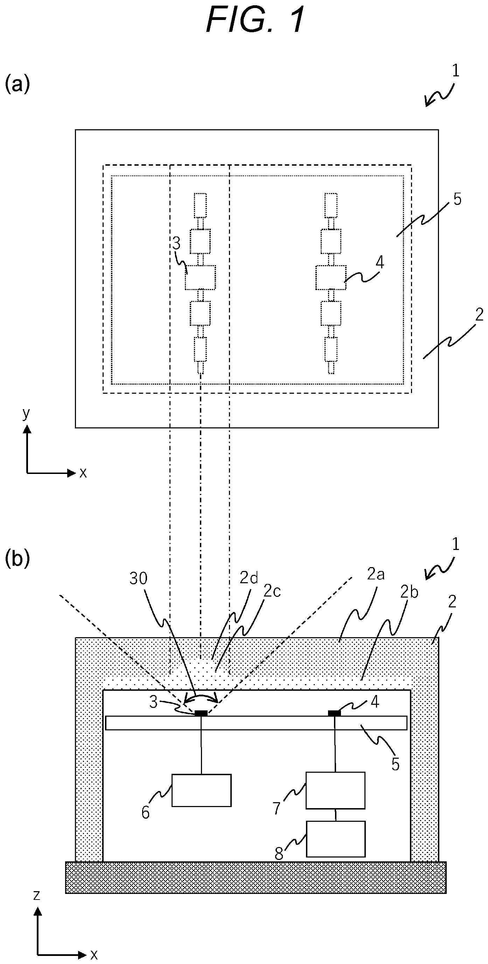

FIG. 1 is a diagram illustrating a radar device 1 according to a first embodiment of the present invention. FIG. 1(a) is a plan perspective view of the radar device 1 according to the present embodiment, and FIG. 1(b) is a cross-sectional view of the radar device 1 according to the present embodiment.

As illustrated in FIG. 1, in the radar device 1 of the present embodiment, a transmission antenna 3 and a reception antenna 4 are mounted on an antenna substrate 5. The transmission antenna 3 emits a radio wave toward a target object, and the reception antenna 4 receives a reflected wave, in which the radio wave emitted from the transmission antenna 3 is reflected by the target object. For example, as illustrated in FIG. 1(a), each of the transmission antenna 3 and the reception antenna 4 is configured by an array antenna in which a plurality of antenna elements are linearly arranged. Note that the transmission antenna 3 and the reception antenna 4 may be configured using antennas other than the array antenna.

A transmission circuit 6 that transmits a modulated signal to the transmission antenna 3 and causes the transmission antenna 3 to emit a radio wave is connected to the transmission antenna 3. A reception circuit 7 that amplifies and demodulates the reflected wave from the target received by the reception antenna 4 to generate a reception signal, and a signal processing circuit 8 that calculates the position and speed of the target based on the reception signal are connected to the reception antenna 4.

In addition, in the radar device 1 of the present embodiment, a cover (radome) 2 for protecting the transmission antenna 3 and the reception antenna 4 is installed so as to cover these antennas. The radome 2 is made of a material that transmits radio waves, such as resin. Note that, in FIG. 1(a), the transmission antenna 3, the reception antenna 4, and the antenna substrate 5 are illustrated by making a part of the radome 2 transparent so that the internal structure of the radar device 1 can be seen.

In the present embodiment, the radome 2 includes a first layer 2a and a second layer 2b that is in contact with the first layer 2a and is disposed at a position closer to the antenna substrate 5 than the first layer 2a, that is, a position closer to the transmission antenna 3 and the reception antenna 4. The second layer 2b is formed using a material having a dielectric constant lower than that of the first layer 2a.

As illustrated in FIG. 1(b), the second layer 2b has a lens-shaped convex portion 2c that is convex in the radio wave emission direction of the transmission antenna 3 at a position corresponding to the transmission antenna 3, that is, a position directly above the transmission antenna 3. On the other hand, the first layer 2a has a concave portion 2d having a shape recessed in the radio wave emission direction of the transmission antenna 3 at a position corresponding to the convex portion 2c of the second layer 2b. When the convex portion 2c and the concave portion 2d are fitted to each other, the radome 2 can be made flat on both the front surface and the back surface in a state where the first layer 2a and the second layer 2b overlap each other.

In FIG. 1(b), assuming that the viewing angle of the radar device 1 by the transmission antenna 3 is in the range indicated by reference numeral 30, the width of the convex portion 2c of the second layer 2b is preferably arranged within the range of the viewing angle 30. Note that the viewing angle 30 is a range in which the signal processing circuit 8 can detect the target object on the basis of the reception signal in the radar device 1, and is determined according to the gains of the transmission antenna 3 and the reception antenna 4, the magnitude of the signal output from the transmission circuit 6 to the transmission antenna 3, and the like.

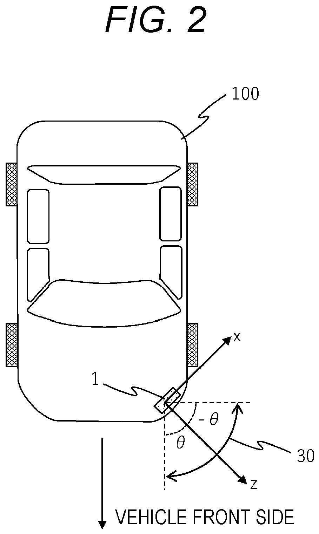

FIG. 2 is a diagram illustrating an example of mounting the radar device 1 on an automobile. In order to detect an obstacle or the like existing on the left front side of the vehicle 100, which is an automobile, the radar device 1 is mounted with the z axis facing the left diagonal front direction of the vehicle 100, for example, at a position illustrated in FIG. 2. Thus, for example, assuming that the angle of the viewing angle 30 is 2θ, objects existing within an angle range of θ on the left and right sides with the left front side of the vehicle 100 as the center are detected by the radar device 1.

Note that FIG. 2 illustrates an example of the mounting position of the radar device 1 in the vehicle 100, and the radar device 1 may be mounted at other positions. In addition, a plurality of radar devices 1 may be mounted at different positions in the vehicle 100.

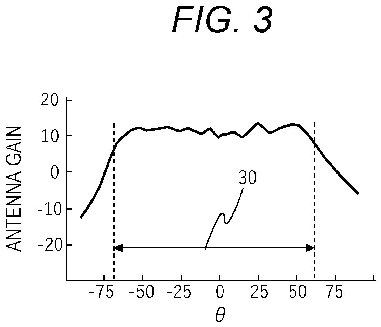

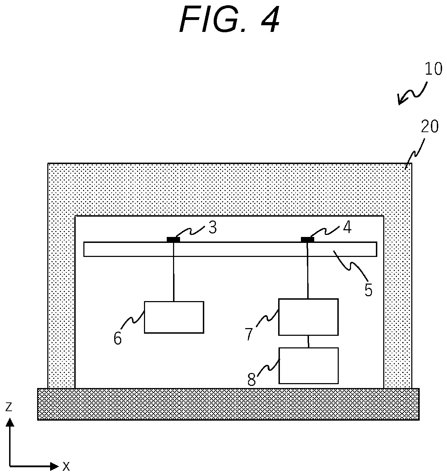

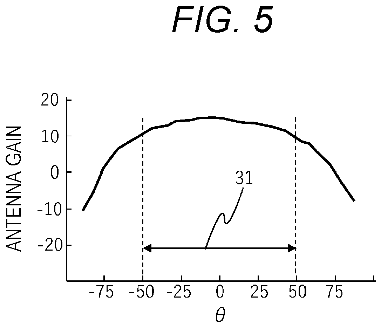

Next, effects of the first layer 2a, the second layer 2b, and the convex portion 2c of the second layer 2b in the radome 2 will be described. FIG. 3 is a diagram illustrating an electromagnetic field analysis result of the antenna gain in the radar device 1 according to the first embodiment of the present invention. FIG. 4 is a cross-sectional view illustrating a radar device 10 according to a comparative example, and FIG. 5 is a diagram illustrating an electromagnetic field analysis result of the antenna gain in the radar device 10 according to the comparative example. In the comparative example illustrated in FIG. 4, a radome 20 is made of a homogeneous material in the radar device 10. Other points have the same structure as the radar device 1 illustrated in FIG. 1.

In the radar device 10 of the comparative example illustrated in FIG. 4, since the radome 20 is made of a homogeneous material, the radio wave emitted from the transmission antenna 3 has an electric field distribution in which the radio wave intensity is the strongest in the vicinity of 0° corresponding to the normal direction of the antenna surface, and the radio wave intensity gradually becomes weaker as the angle increases. As a result, the antenna gain when the transmission antenna 3 is combined with the radome 20 of the comparative example has a shape that gradually decreases with the vicinity of 0° as a vertex, as illustrated in FIG. 5. The viewing angle 31 of the radar device 10 due to this antenna gain is about ±50°.

On the other hand, in the radar device 1 of the present embodiment illustrated in FIG. 1, the concave portion 2d having a high dielectric constant due to the first layer 2a provided in the radome 2 and the convex portion 2c having a low dielectric constant due to the second layer 2b are combined to function as a concave lens for the radio wave emitted from the transmission antenna 3. Due to the effect of the concave lens, the radio wave emitted from the transmission antenna 3 is dispersed from the normal direction of the antenna surface toward the surroundings, and a strong electric field distribution is obtained around the convex portion 2c and the concave portion 2d. As a result, the antenna gain when the transmission antenna 3 is combined with the radome 2 of the present embodiment has a trapezoidal shape spreading in a wide angle direction around 0°, as illustrated in FIG. 3. As compared with the antenna gain of the comparative example illustrated in FIG. 5, the gain increases by about 2 to 3 dB in the regions of -50° or less and +50° or more. The viewing angle 30 of the radar device 1 due to the antenna gain is about ±70°, which is larger than about ±50° of the comparative example.

In addition, in the radar device 10 of the comparative example, since the radome 20 is made of a homogeneous material having a relatively high dielectric constant, a part of the radio wave emitted from the transmission antenna 3 is reflected by the radome 20 due to the difference in dielectric constant from air, and a strong electric field distribution is generated in the vicinity of the reception antenna 4. The reflected wave from the radome 20 mixes with the reflected wave from the target and is received by the reception antenna 4, so that the detection performance is deteriorated in the radar device 10 of the comparative example.

On the other hand, in the radar device 1 of the present embodiment, the radome 2 includes a plurality of layers having different dielectric constants, that is, the first layer 2a and the second layer 2b, where the second layer 2b, which is the layer having the lower dielectric constant, is disposed at a position closer to the transmission antenna 3 and the reception antenna 4. Since the second layer 2b has a relatively low dielectric constant and the difference in dielectric constant from air is small, the radio wave emitted from the transmission antenna 3 first hits the second layer 2b, so that the intensity of the reflected wave from the radome 2 becomes small. Therefore, it is possible to suppress the radio wave emitted from the transmission antenna 3 from being reflected toward the reception antenna 4, and to prevent a strong electric field distribution from occurring near the reception antenna 4. The thickness of the second layer 2b is desirably an integral multiple of 1/2 of the wavelength of the radio wave emitted from the transmission antenna 3.

As described above, in the radar device 1 according to the present embodiment, the radome 2 includes two layers 2a and 2b having relative dielectric constants different from each other, and the convex portion 2c that is convex in the radio wave emission direction of the transmission antenna 3 is provided at a position facing the transmission antenna 3 and the reception antenna 4 in the second layer 2b, so that it is possible to achieve both widening of the viewing angle and reduction of the reflected wave from the radome 2.

The first embodiment of the present invention described above has the following operation effects.

(1) The radar device 1 includes a transmission antenna 3 that emits a radio wave toward a target object, a reception antenna 4 that receives a reflected wave, in which the radio wave emitted from the transmission antenna 3 is reflected by the object, and a radome 2 that covers the transmission antenna 3 and the reception antenna 4. The radome 2 includes a first layer 2a and a second layer 2b disposed at a position closer to the transmission antenna 3 and the reception antenna 4 than the first layer 2a. The second layer 2b of the radome 2 has a dielectric constant lower than that of the first layer 2a, and has a convex portion 2c that is convex in the radio wave emission direction of the transmission antenna 3 at a position corresponding to the transmission antenna 3. The first layer 2a of the radome 2 has a concave portion 2d at a position corresponding to the convex portion 2c of the second layer 2b. With such a configuration, it is possible to achieve both widening of the viewing angle and reduction of the reflected wave from the radome 2.
(2) The convex portion 2c has a lens shape. Therefore, the convex portion 2c and the concave portion 2d can be combined to function as a concave lens, and the radio wave emitted from the transmission antenna 3 can be effectively dispersed from the normal direction of the antenna surface toward the surroundings, thus widening the viewing angle.
(3) The radar device 1 further includes a signal processing circuit 8 that detects a target object based on the reflected wave received by the reception antenna 4. In the radome 2, the convex portion 2c of the second layer 2b and the concave portion 2d of the first layer 2a are preferably arranged within a range of the viewing angle 30 at which the signal processing circuit 8 can detect the object. In this way, the convex portion 2c and the concave portion 2d can be caused to effectively function as concave lenses with respect to the radio wave emitted from the transmission antenna 3, and the viewing angle can be effectively widened.
(4) The thickness of the second layer 2b of the radome 2 is desirably an integral multiple of 1/2 of the wavelength of the radio wave emitted from the transmission antenna 3. In this way, reflection of radio wave emitted from the transmission antenna 3 at the radome 2 can be effectively reduced.

### (Second Embodiment)

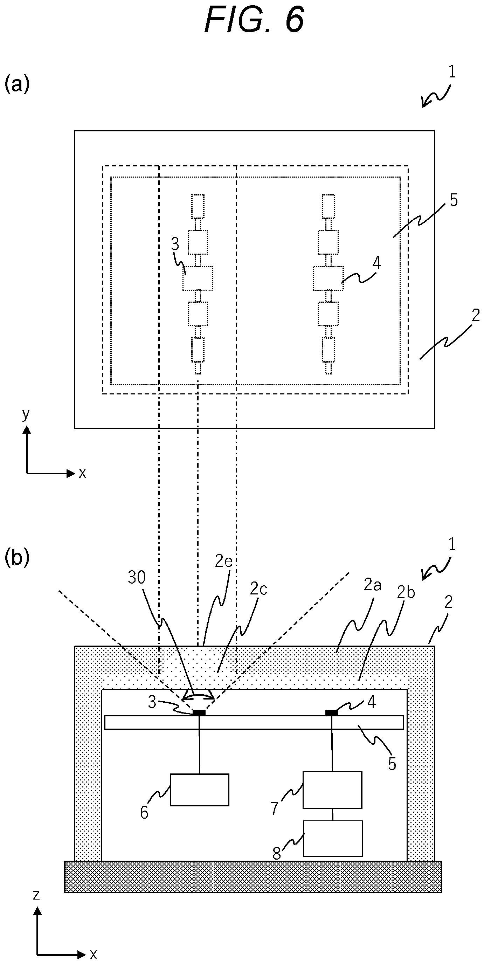

FIG. 6 is a diagram illustrating a radar device 1 according to a second embodiment of the present invention. FIG. 6(a) is a plan perspective view of the radar device 1 according to the present embodiment, and FIG. 6(b) is a cross-sectional view of the radar device 1 according to the present embodiment. In the radar device 1 of the present embodiment, in the first layer 2a of the radome 2, a through-hole 2e is provided in place of the concave portion 2d in FIG. 1 at a position corresponding to the convex portion 2c of the second layer 2b. That is, in the radome 2 in the present embodiment, the second layer 2b is exposed at the portion where the through-hole 2e is provided when viewed from the surface direction. Other points have the same structure as the radar device 1 of the first embodiment illustrated in FIG. 1.

Similarly to the first embodiment, in the radar device 1 of the present embodiment as well, the through-hole 2e of the first layer 2a provided in the radome 2 and the convex portion 2c having a low dielectric constant due to the second layer 2b are combined to function as a concave lens for the radio wave emitted from the transmission antenna 3. Therefore, the viewing angle 30 can be widened. In addition, the second layer 2b, which is a layer having a lower dielectric constant, is disposed at a position close to the transmission antenna 3 and the reception antenna 4, and the radio wave emitted from the transmission antenna 3 first hits the second layer 2b, whereby reflection from the radome 2 is suppressed. Therefore, reflected waves from the radome 2 can be reduced.

### (Third Embodiment)

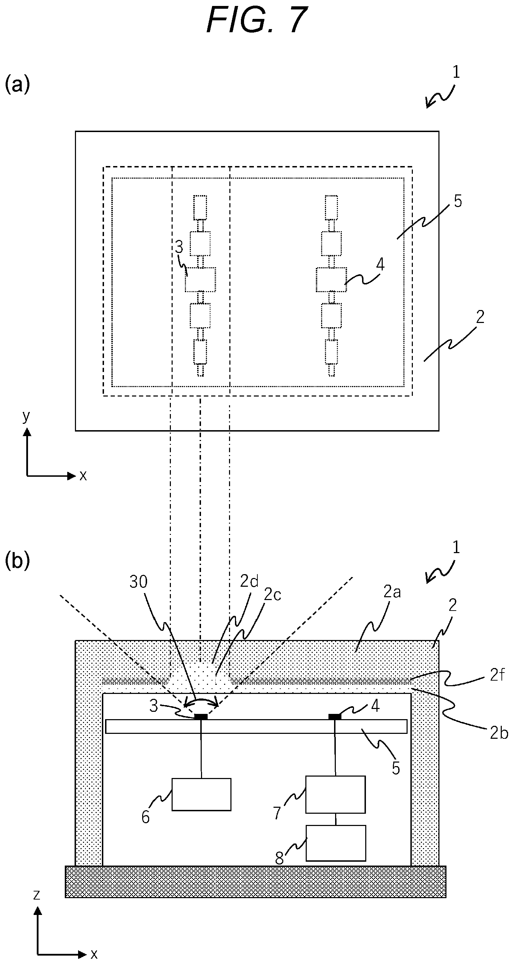

FIG. 7 is a diagram illustrating a radar device 1 according to a third embodiment of the present invention. FIG. 7(a) is a plan perspective view of the radar device 1 according to the present embodiment, and FIG. 7(b) is a cross-sectional view of the radar device 1 according to the present embodiment. In the radar device 1 of the present embodiment, an intermediate layer 2f is further formed between the first layer 2a and the second layer 2b in the radome 2. The dielectric constant of the intermediate layer 2f is lower than that of the first layer 2a and higher than that of the second layer 2b. That is, the radome 2 according to the present embodiment includes three types of layers having different dielectric constants, including the first layer 2a, the second layer 2b, and the intermediate layer 2f, and is formed such that the dielectric constant becomes lower in a layer disposed at a position closer to the transmission antenna 3. Other points have the same structure as the radar device 1 of the first embodiment illustrated in FIG. 1.

Similarly to the first embodiment, in the radar device 1 of the present embodiment as well, the concave portion 2d having a high dielectric constant due to the first layer 2a provided in the radome 2 and the convex portion 2c having a low dielectric constant due to the second layer 2b are combined to function as a concave lens for the radio wave emitted from the transmission antenna 3. Therefore, the viewing angle 30 can be widened. In addition, the second layer 2b which is the layer having the lowest dielectric constant and the intermediate layer 2f which is the layer having the next lowest dielectric constant are arranged in order from positions close to the transmission antenna 3 and the reception antenna 4, and the radio wave emitted from the transmission antenna 3 first hits the second layer 2b and then hits the intermediate layer 2f, whereby reflection from the radome 2 is suppressed. Therefore, reflected waves from the radome 2 can be reduced.

### (Fourth Embodiment)

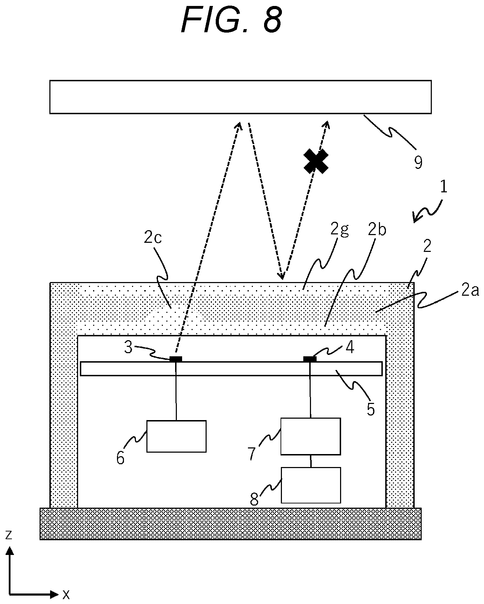

FIG. 8 is a cross-sectional view illustrating a radar device 1 according to a fourth embodiment of the present invention. In the radar device 1 of the present embodiment, a third layer 2g is further formed in addition to the first layer 2a and the second layer 2b in the radome 2. The third layer 2g has a dielectric constant lower than that of the first layer 2a, and is formed on the surface side of the first layer 2a. That is, the radome 2 in the present embodiment further includes the third layer 2g having a dielectric constant lower than that of the first layer 2a, and the first layer 2a is formed in a state of being sandwiched between the second layer 2b and the third layer 2g. Other points have the same structure as the radar device 1 of the first embodiment illustrated in FIG. 1.

In the radar device 1 of the present embodiment, the third layer 2g can suppress the reflected wave from a bumper 9 of the vehicle 100 on which the radar device 1 is mounted from being re-reflected on the surface side of the radome 2. Therefore, it is possible to prevent deterioration of the detection performance of the radar device 1 due to the interference of the reflected wave from the bumper 9 with the radio wave emitted from the transmission antenna 3 and the disturbance of the pattern of the antenna gain.

Each of the second to fourth embodiments of the present invention described above has operation effects similar to those of the first embodiment.

Note that in the third embodiment, an example in which only one intermediate layer 2f is provided between the first layer 2a and the second layer 2b has been described, but two or more layers may be formed as intermediate layers between the first layer 2a and the second layer 2b. In this case, each of the first layer 2a, the second layer 2b, and the intermediate layer is preferably formed such that the dielectric constant becomes lower in the layer disposed at a position closer to the transmission antenna 3. Even in this case, the same effects as described above can be obtained.

In each of the first to fourth embodiments, the convex portion 2c of the second layer 2b may be disposed at a position shifted from immediately above the transmission antenna 3. By shifting the position of the convex portion 2c, the viewing angle of the radar device 1 can be biased in the plus direction or the minus direction, so that the degree of freedom of the installation position of the radar device 1 on the vehicle can be increased.

The embodiments and various modified examples described above are merely examples, and the present invention is not limited to these contents as long as the characteristics of the invention are not impaired. Although various embodiments and modified examples have been described above, the present invention is not limited to these contents. Other modes that can be considered within the scope of the technical idea of the present invention are also encompassed within the scope of the present invention.

The disclosed content of the following priority application is incorporated herein by reference.

Japanese Patent Application No. 2019-116262 (filed on June 24, 2019)

### Reference Signs List

- 1: radar device
- 2: cover (radome)
- 2a: first layer
- 2b: second layer
- 2c: convex portion
- 2d: concave portion
- 2e: through-hole
- 2f: intermediate layer
- 2g: third layer
- 3: transmission antenna
- 4: reception antenna
- 5: antenna substrate
- 6: transmission circuit
- 7: reception circuit
- 8: signal processing circuit

## Claims

1. A radar device comprising:
a transmission antenna that emits a radio wave toward an object;
a reception antenna that receives a reflected wave, in which the radio wave emitted from the transmission antenna is reflected by the object; and
a radome that covers the transmission antenna and the reception antenna; wherein
the radome includes a first layer and a second layer disposed at a position closer to the transmission antenna and the reception antenna than the first layer;
the second layer of the radome has a dielectric constant lower than that of the first layer, and has a convex portion that is convex in a radio wave emission direction of the transmission antenna at a position corresponding to the transmission antenna; and
the first layer of the radome has a concave portion or a through-hole at a position corresponding to the convex portion of the second layer.

2. The radar device according to claim 1, wherein
the convex portion has a lens shape.

3. The radar device according to claim 1 or 2, wherein
the radome includes three or more types of layers having different dielectric constants from each other, the three or more types of layers including the first layer and the second layer, and is formed such that a dielectric constant becomes lower in a layer disposed at a position closer to the transmission antenna.

4. The radar device according to claim 1 or 2, wherein
the radome further includes a third layer having a dielectric constant lower than that of the first layer, and the first layer is formed in a state of being sandwiched between the second layer and the third layer.
